# EUROPÄISCHE PATENTSCHRIFT

(11) **EP 3 870 463 B1**
(45) Veröffentlichungstag und Bekanntmachung des Hinweises auf die Patenterteilung: **07.05.2025**
(21) Anmeldenummer: 19789651.7
(22) Anmeldetag: 15.10.2019
(51) Int. Cl.: B60G 7/00

(54) **FEDERLENKER IN BLECHKONSTRUKTION**
SPRING LINK OF SHEET-METAL CONSTRUCTION
BRAS DE SUSPENSION À STRUCTURE DE TÔLE

(30) Priorität: 23.10.2018 DE 102018218082
(43) Veröffentlichungstag der Anmeldung: 01.09.2021
(73) Patentinhaber: VOLKSWAGEN AKTIENGESELLSCHAFT, 38440 Wolfsburg (DE)
(72) Erfinder: DINDOGRU, Steffen, 38179 Schwülper (DE); GANSKE, Volker, 38102 Braunschweig (DE); BEHN, Michael, 38551 Ribbesbüttel (DE); SCHNEIDER, Felix, 38100 Braunschweig (DE)
(86) Internationale Anmeldenummer: PCT/EP2019/077864
(87) Internationale Veröffentlichungsnummer: WO 2020/083703

(56) Entgegenhaltungen:
- EP-A1- 1 566 293
- EP-A1- 2 818 342
- CN-A- 104 494 385
- CN-A- 106 427 422
- CN-U- 203 511 209
- CN-U- 205 632 004
- DE-A1- 102004 032 471
- DE-A1- 102006 032 595
- DE-A1- 102013 007 375
- DE-A1- 102013 009 426
- DE-A1- 102016 100 666
- DE-A1- 102016 225 389
- JP-A- 2002 166 714
- JP-A- H11 115 429
- US-A1- 2010 032 920

## Beschreibung

Die Erfindung bezieht sich auf einen Federlenker in Blechkonstruktion für eine Kraftfahrzeug-Radaufhängung, umfassend eine Federlenkerschale mit einem ersten und einzigen Endabschnitt zur fahrzeugaufbauseitigen Anbindung und einem zweiten Endabschnitt zur radseitigen Anbindung sowie einem Mittelabschnitt mit in Einbaulage nach oben offenem Profilquerschnitt, der zwischen den vorgenannten Endabschnitten angeordnet ist, ein Schließteil, das an dem Mittelabschnitt der Federlenkerschale befestigt ist und den nach oben offenen Profilquerschnitt desselben überbrückt, wobei das Schließteil einen Schließteilboden zur Abstützung einer Radfeder sowie einen gegenüber dem Schießteilboden erhabenen Federdom aufweist, und mindestens ein Schottblech innerhalb der Federlenkerschale.

Ein entsprechend des Oberbegriffs des Anspruchs 1 ausgebildeter gattungsgemäßer Federlenker ist beispielsweise aus DE 10 2016 100 666 A1 bekannt. Bei diesem ist in und/oder auf der Öffnung der Federlenkerschale zumindest längsabschnittsweise ein als Verstärkungsblech bezeichnetes Bauteil zum Zweck der Optimierung der Steifigkeitsanforderungen angeordnet.

Weitere Federlenker sind aus EP 2 818 342 A1, CN 104 494 385 A und DE 10 2013 009 426 A bekannt. In EP 2 818 342 A1 wird vorgeschlagen, eine Federlenkerschale im Bereich ihres ersten Endabschnitts durch ein Schottblech auszusteifen, welches die gegenüberliegenden Seitenschenkel des Profils der Federlenkerschale miteinander verbindet. CN 104 494 385 A schlägt vor, eine Radfeder nicht am Schließteil sondern am Boden der Federlenkerschale abzustützen. Ausklinkungen am Boden wie am Schließteil werden durch zur Längsrichtung der Federlenkerschale angewinkelte Schottbleche versteift, die Boden und Schließteil miteinander verbinden. Gleichermaßen ist eine versteifende Hülse die Radfeder umgebend zwischen Boden und Schließteil eingeschweißt, um die Abstützung der Radfeder am Boden zu verstärken. DE 10 2013 009 426 A lehrt ein Schottblech, welches gegenüberliegende Seitenschenkel eines Federlenkers aus einem Strangpressprofil miteinander verbindet.

Weiterhin ist aus CN 205 632 004 U ein zweischaliger Dreieckslenker bekannt, welcher unterhalb eines Federabstützung zwischen seiner Oberschale und seiner Unterschale ein unterstützendes Rohrstück aufweist.

Der Erfindung liegt die Aufgabe zu Grunde, einen Federlenker zu schaffen, über welchen hohe Lasten abgestützt werden können und welcher sich bei geringem Bauraumbedarf und geringem Bauteilgewicht einfach und kostengünstig fertigen lässt. Insbesondere zielt die Erfindung darauf ab, Alternativen zu der aus DE 10 2016 100 666 A1 bekannten Lösung aufzuzeigen.

Diese Aufgabe wird durch einen Federlenker gemäß Patentanspruch 1 gelöst. Der erfindungsgemäße Federlenker zeichnet sich insbesondere dadurch aus, dass das mindestens eine Schottblech zwischen einer zur Federlenkerschale weisenden und der Radfeder abgewandte Rückseite des Schließteils und der Federlenkerschale angeordnet ist.

Hierdurch wird ein kompakter Federlenker geschaffen, welcher eine hohe Steifigkeit mit geringem Bauteilgewicht und einfacher Herstellbarkeit miteinander verbindet.

Ein solcher Federlenker eignet sich insbesondere auch für eine Hinterachse eines Elektrofahrzeugs.

Vorteilhafte Ausgestaltungen der Erfindung sind Gegenstand weiterer Patentansprüche. Gemäß einer vorteilhaften Ausgestaltung der Erfindung schließt das mindestens eine Schottblech an die Rückseite des Schließteils an und weist mindestens einen zur Rückseite des Schließteils senkrechten Wandabschnitt auf.

So kann beispielsweise ein solches Schottblech zusätzlich mit der Federlenkerschale verbunden sein, um für das Schließteil eine zusätzliche Abstützung gegen die Federlenkerschale bereitzustellen und hierdurch im Bereich der Federabstützung eine hohe Steifigkeit zu erzielen und einem Atmen der Federlenkerschale unter Last entgegenzuwirken.

Erfindunsgemäß weist die Federlenkerschale einen U-förmigen Profilquerschnitt mit zwei einander gegenüberliegenden Seitenschenkeln und einem diese verbindenden Steg auf. Dabei kann mindestens ein besagtes Schottblech, welches mit der Federlenkerschale verbunden ist, an dem Steg der Federlenkerschale abgestützt sein.

Es ist jedoch auch möglich, ein Schottblech an einem der Seitenschenkel der Federlenkerschale abzustützen.

Bei einer Abstützung eines Schottblechs an einem der Seitenschenkel kann der Seitenschenkel ein Langloch aufweisen. Das Schottblech lässt sich in diesem Fall besonders einfach im Bereich des Langlochs mit dem Seitenschenkel der Federlenkerschale verschweißen.

Das Schottblech kann entweder integral mit dem Schließteil ausgebildet sein, jedoch auch als separates Bauteil ausgeführt werden. Letzteres gestattet eine größere Flexibilität der Anordnung. Vorzugsweise wird hierbei das besagte Schottblech mit dem Schließteil verschweißt.

Ferner kann zur Verbesserung der Abstützung und/oder Schweißbarkeit mindestens ein besagtes Schottblech im Bereich seiner Anbindung an die Federlenkerschale und/oder im Bereich seiner Anbindung an das Schließteil Ausklinkungen aufweisen und/oder abgewinkelte Kanten aufweisen.

Gemäß einer weiteren vorteilhaften Ausgestaltung kann mindestens ein besagtes Schottblech im Bereich der Anbindung an die Federlenkerschale und/oder im Bereich der Anbindung an das Schließteil einen T-förmigen Profilquerschnitt aufweisen. Hierdurch wird eine verbesserte Abstützung gegen das betreffende Bauteil ermöglicht. Überdies kann hierdurch auf besonders einfache Art und Weise eine Befestigung durch Lochschweißen oder Langlochschweißen vorgenommen werden. Entsprechende Öffnungen werden an der Federlenkerschale oder dem Schließteil vorgesehen.

In einer weiteren Ausführungsvariante ist vorgesehen, dass sich mindestens ein besagtes Schottblech rückseitig in den Federdom hineinerstreckt, wodurch letzterer zusätzlich ausgesteift wird, so dass insbesondere bei einer separaten Fertigung des Federdoms der Federdom und/oder die Schale mit einer dünneren Wanddicke ausgeführt werden können oder höhere Umformgrade am Federdom und/oder an der Schale zugelassen werden können.

In einer Ausführungsvariante liegt mindestens ein besagtes Schottblech in einer Ebene, welche durch die Längsmittelachse der Federlenkerschale und eine Senkrechte zur Rückseite des Schließteils aufgespannt wird. In einem solchen Fall kann bereits ein einziges Schottblech ausreichen, um eine hinreichende Aussteifung zu erzielen. Hierdurch bleibt die Anzahl der benötigten Bauteile und Fügeoperationen sehr gering.

Ferner ist es möglich, mindestens ein besagtes Schottblech durch Wandausstellungen des Schließteils zu bilden, welche sich von dem Schließteil in die Federlenkerschale hineinerstrecken. Die Handhabung eines zusätzlichen Bauteils entfällt hierbei vollständig. Eine Wandausstellung kann beispielsweise mit einem Seitenschenkel der Federlenkerschale verschweißt sein. Es ist jedoch auch möglich, eine solche Wandausstellung mit einem die Seitenschenkel der Federlenkerschale verbindenden Steg der Federlenkerschale zu verschweißen.

Erfindungsgemäß ist das Schottblech als im Wesentlichen ebenes Blechelement ausgeführt.

In einer nicht erfindungsgemäßen Variante ist es jedoch auch möglich, ein solches mit einer Profilierung zu versehen.

In einer nicht erfindungsgemäßen Variante weist mindestens ein besagtes Schottblech einen U-förmigen Profilquerschnitt auf, der sich in Längsrichtung der Federlenkerschale erstreckt und mit freien Enden seiner Schenkel an der Rückseite des Schließteils befestigt ist. Der Aussteifungseffekt ist hierbei im Idealfall so groß, dass eine Abstützung des Schottblechs gegen die Federschale entfallen kann. Grundsätzlich kann jedoch auch ein solches Schottblech zusätzlich gegen die Federschale abgestützt werden.

Zur weiteren Aussteifung kann der Schließteilboden auskragende Arme ausbilden, welche entlang der Oberkanten der Seitenschenkel der Federlenkerschale verlängert sind und diese übergreifen.

Weiterhin kann der Schließteilboden an seinen Kanten Materialumlegungen in Richtung der Federlenkerschale aufweisen, welche sich in den Profilquerschnitt der Federlenkerschale hineinerstrecken.

Weiterhin ist es möglich, in allen vorgenannten Ausführungsvarianten sowie unabhängig von der Verwendung eines Schottblechs das Schließteil zweiteilig auszuführen, derart, dass der Schließteilboden eine Auflagefläche für die Radfeder aufweist, der Federdom von der der Auflagefläche gegenüberliegenden Rückseite in den Schließteilboden eingesetzt und an diesem befestigt, vorzugsweise angeschweißt ist. Der Federdom kann allerdings auch auf die Auflagefläche der Radfeder aufgesetzt und dort angeschweißt sein. Hierdurch ist es möglich, den Schließteilboden aus einem hochfesten Blechmaterial herzustellen, mit dem die für einen Federdom benötigten Umformgrade nicht oder lediglich mit hohem Aufwand zu verwirklichen wären. Der Federdom seinerseits dient vorwiegend der Seitenführung der Radfeder und kann dementsprechend aus einem umformtechnisch günstigeren Werkstoff gefertigt werden.

Nachfolgend wird die Erfindung anhand von in der Zeichnung dargestellten Ausführungsbeispielen näher erläutert. Die Zeichnung zeigt in:
- Figur 1: eine räumliche Darstellung eines ersten Ausführungsbeispiels für einen Federlenker nach der Erfindung,
- Figur 2: eine Frontalansicht des Federlenkers aus Figur 1,
- Figur 3: eine Längsschnittansicht des Federlenkers aus Figur 1 im Bereich der Radfederabstützung,
- Figur 4: eine räumliche Darstellung eines zweiten Ausführungsbeispiels für einen Federlenker nach der Erfindung,
- Figur 5: eine Längsschnittansicht des Federlenkers aus Figur 4 im Bereich der Radfederabstützung,
- Figur 6: eine räumliche Darstellung eines dritten Ausführungsbeispiels für einen Federlenker nach der Erfindung,
- Figur 7: eine Längsschnittansicht des Federlenkers aus Figur 6 im Bereich der Radfederabstützung,
- Figur 8: eine räumliche Darstellung eines vierten Ausführungsbeispiels für einen Federlenker nach der Erfindung,
- Figur 9: eine Längsschnittansicht des Federlenkers aus Figur 8 im Bereich der Radfederabstützung,
- Figur 10: eine räumliche Darstellung eines fünften Ausführungsbeispiels für einen Federlenker nach der Erfindung,
- Figur 11: eine Ansicht von unten auf den Federlenker gemäß Figur 10,
- Figur 12: eine räumliche Darstellung eines sechsten Ausführungsbeispiels für einen Federlenker nach der Erfindung,
- Figur 13: eine Querschnittsansicht des Federlenkers aus Figur 12, und in
- Figur 14: eine Seitenansicht des Federlenkers aus Figur 12 im Bereich der Radfederabstützung.

Die in den Figuren dargestellten Ausführungsbeispiele beziehen sich jeweils auf einen Federlenker 1 für eine Kraftfahrzeug-Radaufhängung. Ein solcher Federlenker 1 dient dazu, einen Radträger gegen einen Fahrzeugaufbau oder einen an diesem befestigten Hilfsrahmen abzustützen. Weiterhin ist für einen Federlenker 1 die Abstützung einer Radfeder oder eines Federbeins charakteristisch.

Die Federlenker 1 der Ausführungsbeispiele sind jeweils in Blechkonstruktion ausgeführt und weisen dementsprechend jeweils eine aus einer Blechplatine hergestellte Federlenkerschale 2 mit einem ersten Endabschnitt 3 zur fahrzeugaufbauseitigen Anbindung und einem zweiten Endabschnitt 4 zur radseitigen Anbindung auf. Weiterhin weist die Federlenkerschale 2 einen Mittelabschnitt 5 auf, der zwischen den vorgenannten Endabschnitten 3 und 4 angeordnet ist und diese miteinander verbindet.

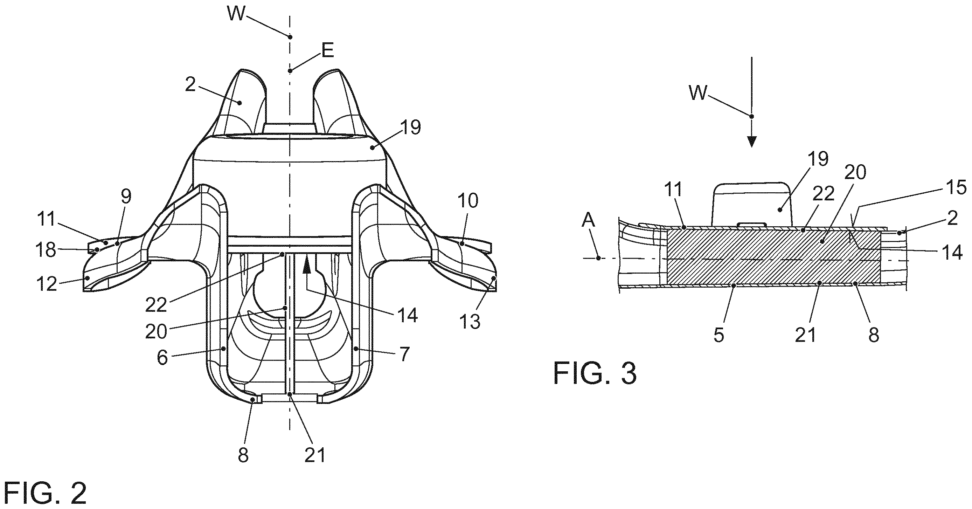

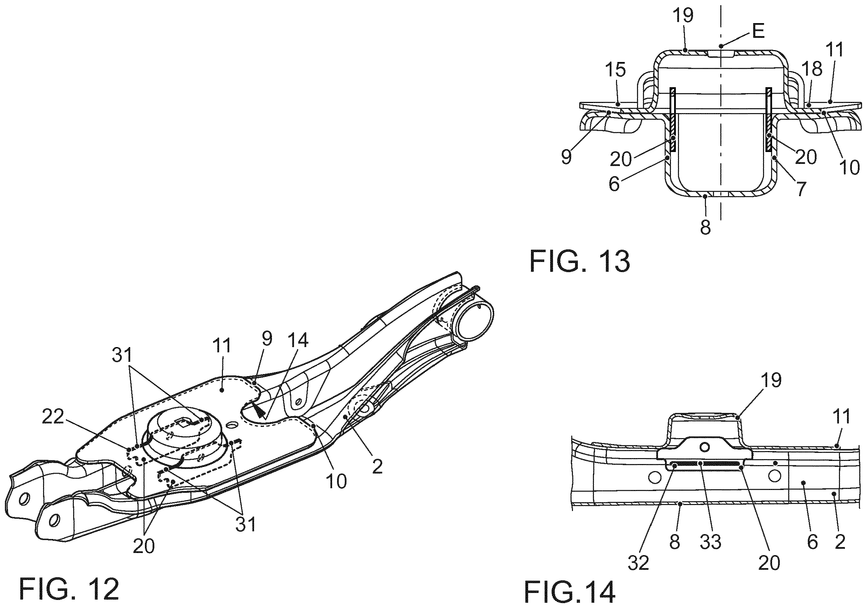

Die Federlenkerschale 2 mit Abschnitten 3, 4 und 5 ist als Blechformteil ausgebildet, welches einen nach oben offenen Profilquerschnitt aufweist. Der Profilquerschnitt der Federlenkerschale 2 im Bereich des Mittelabschnitts 5 ist beispielsweise in den Figuren 2 und 13 näher dargestellt.

Wie etwa den Figuren 2 und 13 entnommen werden kann, ist der Profilquerschnitt der Federlenkerschale 2 im Wesentlichen U-förmig ausgebildet und öffnet sich nach oben, d.h. vorliegend zur Radfederseite hin. Bei den dargestellten Ausführungsbeispielen sind dazu zwei Seitenschenkel 6 und 7 des Profils durch einen Steg 8 miteinander verbunden. Die Seitenschenkel 6 und 7 können im Wesentlichen parallel zueinander angeordnet sein, jedoch auch einen kleinen Anstellwinkel aufweisen, welcher das Entformen der Federlenkerschale 2 aus dem Formwerkzeug begünstigt.

Die freien Enden der Seitenschenkel 6 und 7 des U-förmigen Profilquerschnitts können jeweils nach außen abgebogen sein, um insbesondere im Mittelbereich 5 verbreiterte Auflageflächen 9 und 10 für ein weiter unten noch näher zu erläuterndes Schließteil 11 zu bilden, welches die offene Seite des Profilquerschnitts überbrückt. Im Profilquerschnitt gemäß den Figuren 2 und 20 verlaufen die Auflageflächen 9 und 10 in etwa unter einem rechten Winkel zu den Seitenschenkeln 6 und 7. Außenränder 12 und 13 der Auflageflächen 9 und 10 können gegebenenfalls zum Steg 8 hin umgebogen sein.

Ferner kann der Profilquerschnitt der Federlenkerschale 2 zumindest im Bereich des Mittelabschnitts 5 in Bezug auf eine Profilmittelebene E symmetrisch ausgebildet sein, welche durch die Längsrichtung der Federlenkerschale in diesem Bereich sowie eine Senkrechte zum Schließteil 11 aufgespannt wird. Die Profilmittelebene E erstreckt sich gleichbeabstandet zwischen den Seitenschenkeln 6 und 7 in Längsrichtung A der Federlenkerschale 2, welche vorliegend auch als Profilmittelachse verstanden wird.

Insbesondere kann die Wirkrichtung W der Radfeder mit der Profilmittelebene E zusammenfallen. Vorzugsweise ist die Wirkrichtung W der Radfeder senkrecht zum Schließteil 11.

Dieses Schließteil 11 ist an dem Mittelabschnitt 5 der Federlenkerschale 2 befestigt. Es überbrückt hierbei den offenen Profilquerschnitt der Federlenkerschale 2. Dabei liegt das Schließteil 11 mit seiner der Radfeder abgewandten Rückseite 14 auf den Auflageflächen 9 und 10 des Mittelabschnitts 5 auf. Es ist dort mit der Federlenkerschale 2 verbunden, vorzugsweise verschweißt oder verbördelt.

An der zur Radfeder weisenden Oberseite des Schließteils 11 ist eine Stützfläche 15 zur Abstützung einer Radfeder vorgesehen.

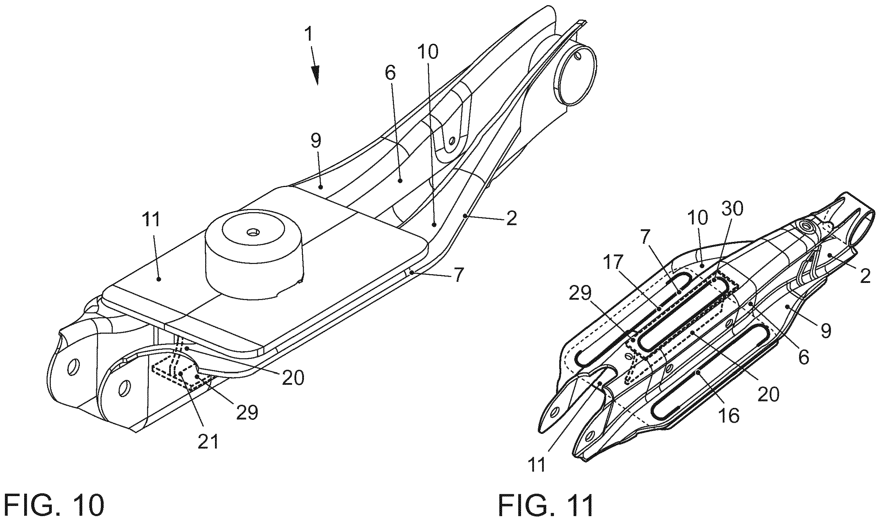

Ein Verschweißen des Schließteils 11 mit der Federlenkerschale 2 ist vorzugsweise von der Rückseite 14 des Schließteils 11 und der Federlenkerschale 2 her vorgenommen, wie dies in Figur 11 anhand der Schweißnähte 16 und 17 gut zu erkennen ist. Die Schweißnähte 16 und 17 können sich in diesem Fall unterhalb der Stützfläche 15 für die Radfeder befinden.

Das am Mittelabschnitt der Federlenkerschale 2 befestigte Schließteil 11 weist einen Schließteilboden 18 und einen Federdom 19 auf. Während sich eine Radfeder an dem Schließteilboden 18 axial abstützt, erstreckt sich der Federdom 19 in die Radfeder hinein.

Der Schließteilboden 18 und der Federdom 19 können grundsätzlich aus einer einzigen Blechplatine hergestellt sein. Es ist jedoch auch möglich, beide Komponenten zunächst separat zu fertigen und anschließend miteinander zu verbinden, beispielsweise miteinander zu verschweißen.

Der Federdom 19 kann auf die Stützfläche 15 für die Radfeder aufgesetzt und dort befestigt sein. Es ist jedoch auch möglich, den Federdom 19 von der der Stützfläche 15 gegenüberliegenden Rückseite in den Schließteilboden 18 einzusetzen und an diesem zu befestigen. Hierdurch kann für den Schließteilboden 18 eine Blechplatine aus hochfestem Material zum Einsatz kommen, um im Mittelbereich des Federlenkers eine hohe Steifigkeit zu erzielen, während sich am Federdom 19 gleichwohl hohe Umformgrade realisieren lassen.

Weiterhin weisen alle Ausführungsbeispiele mindestens ein Schottblech 20 auf, welches sich in einem Raum zwischen der Rückseite 14 des Schließteils 11 und der Federlenkerschale 2 erstreckt. Zur Klarstellung sei darauf hingewiesen, dass dieser Raum in Sinne der vorliegenden Erfindung axial auf die Erstreckung des Schließteils 11 begrenzt ist, also auf jenen Bereich begrenzt ist, der bei Betrachtung von oben senkrecht unter dem Schließteil 11 liegt. Die Erstreckung des Schottblechs 20 kann auf diesen Raum beschränkt bleiben. Jedoch kann sich das Schottblech 20 auch aus diesem Raum heraus erstrecken. In Bezug auf die Radfeder ist das mindestens eine Schottblech 20 unterhalb des Schließteils 11 angeordnet.

Das Schottblech 20 kann entweder als separates Bauteil oder als an das Schließteil 11 angeformter Abschnitt ausgeführt sein.

Über ein solches Schottblech 20 kann eine zusätzliche Aussteifung des Federlenkers 1 im Bereich der Radfederabstützung erzielt werden.

Eine solche Aussteifung kann beispielsweise durch eine rückseitige Versteifung des Schließteils 11, insbesondere des Schließteils 11 allein, erzielt werden.

Ferner kann ein Steifigkeitsgewinn durch eine innenseitige Versteifung der Federlenkerschale 2, insbesondere der Federlenkerschale 2 allein, erzielt werden.

Überdies kann ein zusätzlicher Steifigkeitsgewinn durch eine zusätzliche Abstützung des Schließteils 11 gegen die Federlenkerschale 2 erzielt werden, indem das Schottblech 20 beide miteinander verbindet. Hierdurch wird neben der Abstützung auf den Seitenschenkeln 6 und 7 eine zusätzliche vertikale Abstützung des Schließteils 11 im Bereich zwischen den Seitenschenkeln 6 und 7 erzielt.

Nachfolgend werden besonders vorteilhafte Varianten für eine solche zusätzliche Aussteifung des Federlenkers 1 vorgestellt, welche allein oder in Kombination bei einem Federlenker 1 der vorstehend erläuterten Bauart zum Einsatz kommen können.

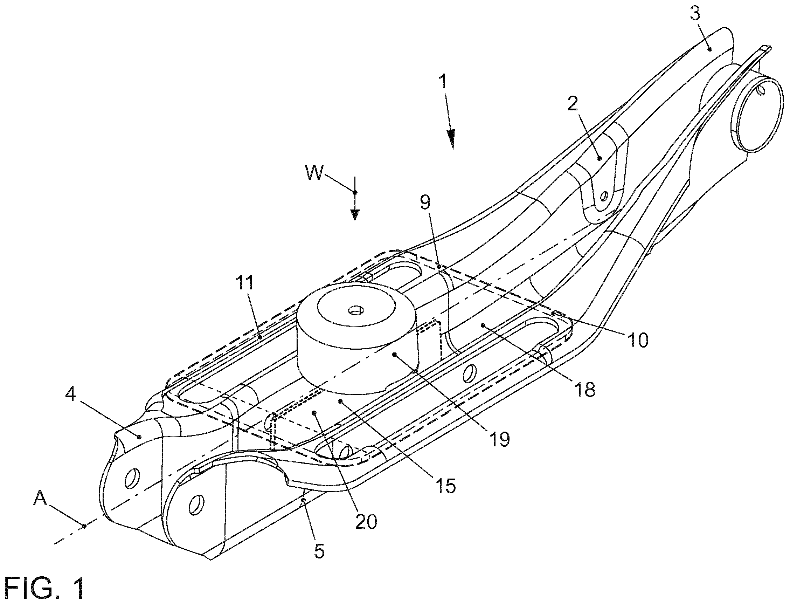

Wie dem ersten Ausführungsbeispiel gemäß den Figuren 1 bis 3 entnommen werden kann, schließt das Schottblech 20 an die zur Federlenkerschale 2 weisende und der Radfeder abgewandte Rückseite 14 des Schließteils 11 an.

Es ist vorliegend hochkant eingebaut und stützt sich mit einer Unterkante 21 an der Federlenkerschale 2, insbesondere deren Steg 8 ab.

Das Schottblech 20 ist als gänzlich oder zumindest überwiegend ebene Platine ausgeführt, die auf der Längsachse A der Federlenkerschale 2 angeordnet und von deren Seitenschenkeln 6 und 7 beabstandet, vorzugsweise gleichbeabstandet ist.

Das Schottblech 20 kann an seiner Unterkante 21 mit der Federlenkerschale 2 und an seiner Oberkante 22 mit der Rückseite 14 des Schließteils 11 verschweißt sein. Das Schottblech (20) verläuft, wie in Figur 1 zu erkennen, unter dem Federdom 19 hindurch.

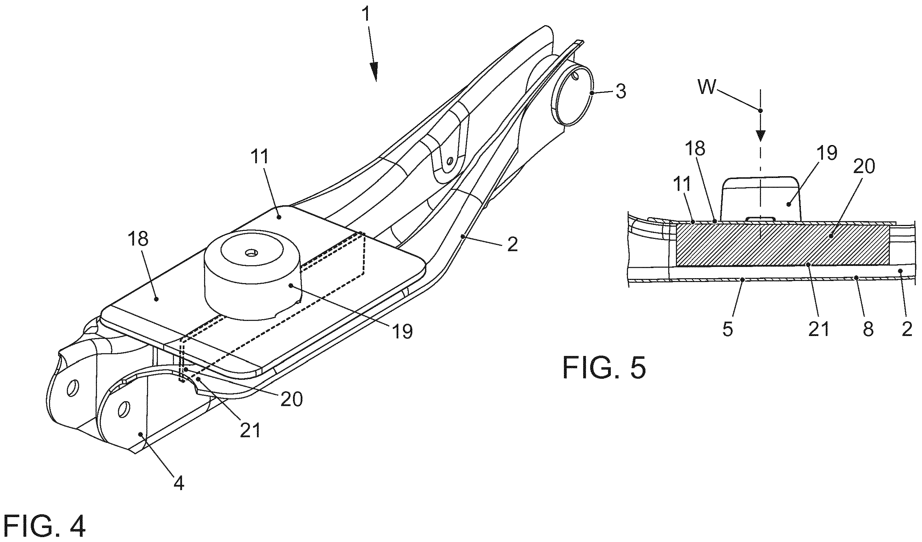

Das zweite Ausführungsbeispiel in den Figuren 4 und 5 zeigt eine Abwandlung des ersten Ausführungsbeispiels, bei welchem das mittig zwischen den Seitenschenkeln 6 und 7 angeordnete Schottblech 20 lediglich einseitig an der Rückseite 14 des Schließteils 11 angebunden ist. Die Unterkante 21 des Schottblechs 20 ist hierbei von der Federlenkerschale 2 beabstandet und mit dieser nicht verbunden.

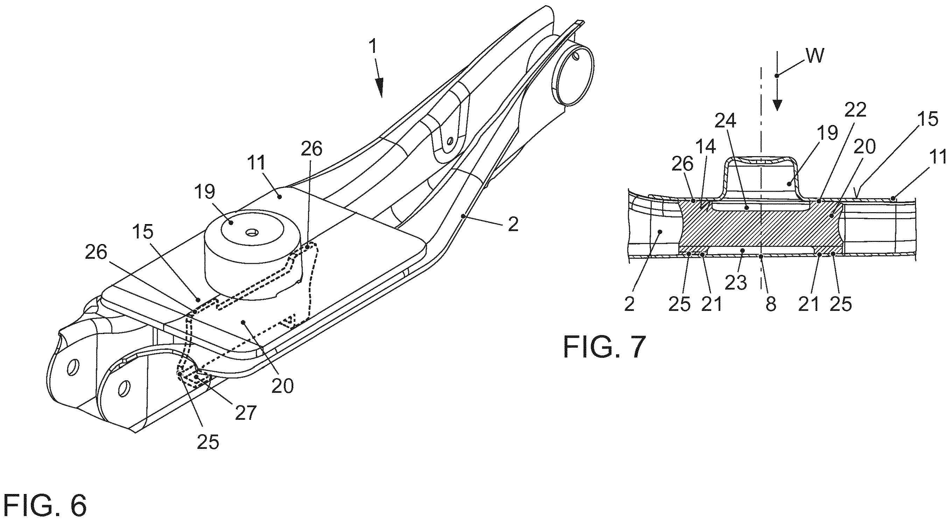

Das dritte Ausführungsbeispiel in den Figuren 6 und 7 zeigt eine weitere Abwandlung des ersten Ausführungsbeispiels, bei dem zur Verbesserung der Abstützung und Schweißbarkeit die Unter- und Oberkanten 21 und 22 des Schottblechs 20 gegenüber dem ersten Ausführungsbeispiel modifiziert sind. So befindet sich vorliegend jeweils in einem Mittelabschnitt der jeweiligen Unter- und Oberkante 21 und 22 eine Ausklinkung 23 bzw. 24, so dass das Schottblech 20 die Rückseite 14 des Schließteils 11 und den Steg 8 der Federlenkerschale 2 lediglich mit Endabschnitten 25 und 26 der betreffenden Kanten 21 und 22 kontaktiert, im Übrigen jedoch von dem jeweiligen Bauteil beabstandet ist. Vorzugsweise liegen besagte Endabschnitte 25 und 26 der Kanten 21 und 22 unterhalb der Stützfläche 15 für die Radfeder, so dass eine Vertikalkraftabstützung von Radfederkräften W zur Federlenkerschale 32 hin ohne Kraftumlenkung möglich ist.

Weiterhin können, wie in Figur 6 für die Unterkante 22 des Schottblechs 20 beispielhaft dargestellt, die Kanten 21 und 22 abgewinkelt sein, um eine größere Kontaktfläche zur Federlenkerschale 2 oder dem Schließteil 11 für ein Verschweißen zu schaffen. Eine solche Abwinkelung 27 kann ohne großen Aufwand an einer Blechplatine angebracht werden.

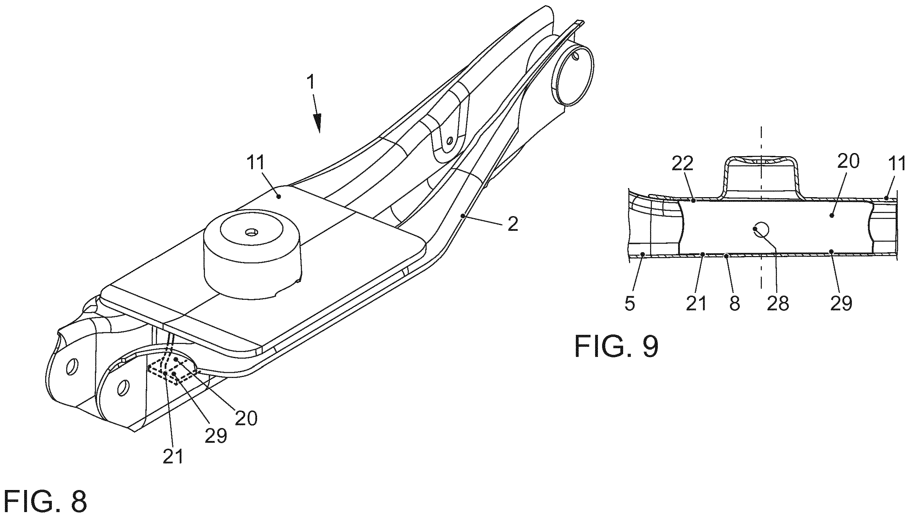

Das vierte Ausführungsbeispiel in den Figuren 8 und 9 zeigt als weitere Abwandlung die Möglichkeit, an den Unter- und/oder Oberkanten 21 und 22 des Schottblechs 20 eine T-förmige Profilierung 29 zur Anbindung an die Federlenkerschale 2 und/oder die Rückseite des Schließteils 11 vorzusehen. Zudem können zur Gewichtseinsparung an einem sich in Vertikalrichtung bzw. senkrecht zur Rückseite 14 des Schließteils 11 erstreckenden Wandabschnitt Ausnehmungen 28 vorgesehen sein.

Bei dem vierten Ausführungsbeispiel erfolgt die Befestigung des Schottblechs 20 an der Federlenkerschale 2 und/oder dem Schließteil 11 vorzugsweise durch Lochschweißungen.

Das fünfte Ausführungsbeispiel in den Figuren 10 und 11 entspricht im Wesentlichen dem vierten Ausführungsbeispiel. In Unterschied zu diesem weist das Schottblech 20 entlang seiner Unterkante 21 eine verbreiterte T-förmige Profilierung 29 auf. Wie Figur 11 entnommen werden kann, erfolgt hier die Verbindung zur Federlenkerschale 2 durch eine Langlochschweißung 30. Ferner können die Schweißnähte 16 und 17 zur Verbindung des Schließteils 11 mit den Seitenschenkeln 6 und 7 der Federlenkerschale 2 ebenfalls von der Unterseite der Federlenkerschale 2 her als Langlochschweißungen ausgeführt sein.

Anstelle eines einzigen Schottblechs 20 können auch zwei oder mehr Schottbleche 20 zwischen der Rückseite 14 des Schließteils 11 und der Federlenkerschale 2 angeordnet werden.

Die Figuren 12 bis 14 zeigen im Rahmen eines sechsten Ausführungsbeispiels die Möglichkeit, zwei separate Schottbleche 20 vorzusehen, welche jeweils mindestens einen zur Rückseite 14 des Schließteils 11 senkrechten Wandabschnitt aufweisen, um das Schließteil 11 zusätzlich in Wirkrichtung W der Radfeder auszusteifen und abzustützen.

Die beiden Schottbleche 20 des sechsten Ausführungsbeispiels sind vorliegend vollständig unterhalb des Schließteils 11 angeordnet. Sie stützen sich flächig jeweils an einem der Seitenschenkel 6 und 7 sowie mit einer Oberkante 22 an der Rückseite 14 des Schließteils 11 ab. Prinzipiell ist es auch möglich, die Unterkanten 21 der beiden Schottbleche 20 gegen den Steg 8 der Federlenkerschale 2 abzustützen. Die Anbindung erfolgt vorzugsweise durch Schweißen.

Wie Figur 13 entnommen werden kann, verlaufen die Schottbleche 20 im Wesentlichen parallel zu den Seitenschenkeln 6 und 7 und strecken sich von dort jeweils in den Federdom 19 des Schließteils 11 hinein. Vorzugsweise sind die Schottbleche 20 jeweils mit der Rückseite 14 und gegebenenfalls auch mit dem Federdom 19 verschweißt, wie dies durch die Bezugszeichen 31 in Figur 12 angedeutet ist.

Zur Anbindung an die Seitenschenkel 6 und 7 können letztere mit langlochartigen Ausnehmungen 32 versehen sein, an welchen die Schottbleche 20 jeweils durch Langlochschweißungen 33 befestigt sind.

Die Erfindung wurde vorstehend anhand von Ausführungsbeispielen und weiteren Abwandlungen näher erläutert. Die Ausführungsbeispiele und Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf die konkret beschriebenen Ausführungsbeispiele und Abwandlungen beschränkt, sondern umfasst alle durch die Patentansprüche definierten Ausgestaltungen.

### Bezugszeichenliste

| | | | |
|---|---|---|---|
| 1 | Federlenker | 20 | Schottblech |
| 2 | Federlenkerschale | 21 | Unterkante |
| 3 | Endabschnitt | 22 | Oberkante |
| 4 | Endabschnitt | 23 | Ausklinkung |
| 5 | Mittelabschnitt | 24 | Ausklinkung |
| 6 | Seitenschenkel | 25 | Endabschnitt |
| 7 | Seitenschenkel | 26 | Endabschnitt |
| 8 | Steg | 27 | Abwinkelung |
| 9 | Auflagefläche | 28 | Ausnehmung |
| 10 | Auflagefläche | 29 | T-Profil |
| 11 | Schließteil | 30 | Langlochschweißung |
| 12 | Außenrand | 31 | Schweißnaht |
| 13 | Außenrand | 32 | Langloch |
| 14 | Rückseite | 33 | Langlochschweißung |
| 15 | Stützfläche | A | Längsachse |
| 16 | Schweißnaht | E | Mittelebene |
| 17 | Schweißnaht | W | Wirkrichtung der Federkraft |
| 18 | Schließteilboden | | |
| 19 | Federdom | | |

## Patentansprüche

1. Federlenker (1) in Blechkonstruktion für eine Kraftfahrzeug-Radaufhängung, wobei besagter Federlenker (1) umfasst:
eine Federlenkerschale (2) mit einem ersten und einzigen Endabschnitt (3) zur fahrzeugaufbauseitigen Anbindung und einem zweiten Endabschnitt (4) zur radseitigen Anbindung sowie einem Mittelabschnitt (5) mit in Einbaulage nach oben offenem Profilquerschnitt, der zwischen den vorgenannten Endabschnitten (3, 4) angeordnet ist, wobei die Federlenkerschale (2) einen U-förmigen Profilquerschnitt mit zwei einander gegenüberliegenden Seitenschenkeln (6, 7) und einem diese verbindenden Steg (8) aufweist,
ein Schließteil (11), das lediglich an dem Mittelabschnitt (5) der Federlenkerschale (2) befestigt ist und den nach oben offenen Profilquerschnitt desselben überbrückt, wobei das Schließteil (11) einen Schließteilboden (18) zur Abstützung einer Radfeder sowie einen gegenüber dem Schließteilboden (18) erhabenen Federdom (19) aufweist, und
mindestens ein Schottblech (20) innerhalb der Federlenkerschale (2),
**dadurch gekennzeichnet, dass**
das mindestens eine Schottblech (20) in Form einer gänzlich oder zumindest überwiegend ebenen Platine zwischen einer zur Federlenkerschale (2) weisenden und der Radfeder abgewandten Rückseite (14) des Schließteils (11) und der Federlenkerschale (2) angeordnet ist und längs zur Federlenkerschale (2) sowie senkrecht zur Rückseite (14) des Schließteils (11) unter dem Federdom (19) hindurch verläuft, wobei das mindestens eine Schottblech (20) von den Seitenschenkeln (6, 7) beabstandet ist, und wobei das mindestens eine Schottblech (20) an die Rückseite (14) des Schließteils (11) anschließt und mindestens einen zur Rückseite (14) des Schließteils (11) senkrechten Wandabschnitt aufweist;
oder dass
das zwei Schottbleche (20) jeweils zwischen einer zur Federlenkerschale (2) weisenden und der Radfeder abgewandten Rückseite (14) des Schließteils (11) und der Federlenkerschale (2) angeordnet sind,
wobei die zwei separaten Schottbleche (20) jeweils mindestens einen zur Rückseite (14) des Schließteils (11) senkrechten Wandabschnitt aufweisen, um das Schließteil (11) zusätzlich in Wirkrichtung (W) der Radfeder auszusteifen und abzustützen, wobei die zwei Schottbleche (20) vollständig unterhalb des Schließteils (11) angeordnet sind und sich flächig jeweils an einem der Seitenschenkel (6, 7) abstützen sowie mit einer Oberkante (22) an der Rückseite (14) des Schließteils (11) abgestützt sind, und
wobei die zwei Schottbleche (20) im Wesentlichen parallel zu den Seitenschenkeln (6, 7) verlaufen und sich von dort jeweils in den Federdom (19) des Schließteils (11) hinein erstrecken.

2. Federlenker (1) nach Anspruch 1 entsprechend der ersten erfindungsgemäßen Variante, **dadurch gekennzeichnet, dass** mindestens ein besagtes Schottblech (20) mit der Federlenkerschale (2) verbunden ist, um für das Schließteil (11) eine zusätzliche Abstützung gegen die Federlenkerschale (2) bereitzustellen.

3. Federlenker (1) nach Anspruche 1 oder 2, **dadurch gekennzeichnet, dass** mindestens ein besagtes Schottblech (20), welches mit der Federlenkerschale (2) verbunden ist, an dem Steg (8) abgestützt ist.

4. Federlenker (1) nach Anspruch 1 entsprechend der zweiten erfindungsgemäßen Variante, **dadurch gekennzeichnet, dass** die Seitenschenkel (6, 7) ein Langloch (32) aufweisen und die zwei Schottbleche (20) im Bereich des Langlochs (32) mit dem jeweiligen Seitenschenkel (6, 7) verschweißt sind.

5. Federlenker (1) nach einem der Ansprüche 1 bis 4, **dadurch gekennzeichnet, dass** mindestens ein besagtes Schottblech (20) im Bereich seiner Anbindung an die Federlenkerschale (2) und/oder im Bereich seiner Anbindung an das Schließteil (11) Ausklinkungen (23, 24) aufweist und/oder abgewinkelte Kanten (21, 22) aufweist.

6. Federlenker (1) nach Anspruch 1 entsprechend der ersten erfindungsgemäßen Variante oder nach Anspruch 2, **dadurch gekennzeichnet, dass** mindestens ein besagtes Schottblech (20) im Bereich der Anbindung an die Federlenkerschale (2) und/oder im Bereich der Anbindung an das Schließteil (11) einen T-förmigen Profilquerschnitt (29) aufweist.

7. Federlenker (1) nach Anspruch 1 entsprechend der ersten erfindungsgemäßen Variante oder nach einem der Ansprüche 2 oder 6, **dadurch gekennzeichnet, dass** mindestens ein besagtes Schottblech (20) sich rückseitig in den Federdom (19) hineinerstreckt.

8. Federlenker (1) nach Anspruch 1 entsprechend der ersten erfindungsgemäßen Variante oder nach einem der Ansprüche 2, 6 oder 7, **dadurch gekennzeichnet, dass** mindestens ein besagtes Schottblech (20) in einer Ebene (E) liegt, welche durch die Längsmittelachse (A) der Federlenkerschale (2) im Mittelabschnitt (5) und eine Senkrechte zur Rückseite (14) des Schließteils (11) aufgespannt wird.

9. Federlenker (1) nach Anspruch 1 entsprechend der zweiten erfindungsgemäßen Variante oder nach Anspruch 4, **dadurch gekennzeichnet, dass** die zwei Schottbleche (20) jeweils mit der Rückseite (14) oder jeweils mit der Rückseite (14) und dem Federdom (19) verschweißt sind.

10. Federlenker (1) nach einem der Ansprüche 1 bis 9, **dadurch gekennzeichnet**, der Schließteilboden (18) auskragende Arme (40, 41) ausbildet, welche entlang der Oberkanten der Seitenschenkel (6, 7) der Federlenkerschale (2) verlängert sind und diese übergreifen und/oder der Schließteilboden (18) an seinen Kanten Materialumlegungen (44, 45) in Richtung der Federlenkerschale (2) aufweist, welche sich in den Profilquerschnitt der Federlenkerschale (2) hineinerstrecken.

11. Federlenker (1) nach einem der Ansprüche 1 bis 10, **dadurch gekennzeichnet, dass** der Schließteilboden (18) eine Stützfläche (15) für die Radfeder aufweist und der Federdom (19) von der der Stützfläche (15) gegenüberliegenden Rückseite (14) in den Schließteilboden (18) eingesetzt und an diesem befestigt, vorzugsweise angeschweißt ist oder der Federdom (19) auf die Stützfläche (15) aufgesetzt und an dieser befestigt, vorzugsweise angeschweißt ist.

## Claims

1. Spring link (1) in a sheet metal construction for a motor vehicle wheel suspension, said spring link (1) comprising:
a spring link shell (2) having a first and only end portion (3) for attachment on the vehicle body and a second end portion (4) for attachment on the wheel, as well as a central portion (5) having a profile cross-section that is open upwards in the fitting position and is arranged between the aforementioned end portions (3, 4), the spring link shell (2) having a U-shaped profile cross-section that has two opposite side legs (6, 7) and a bridging element (8) connecting them,
a closing part (11) which is only fastened to the central portion (5) of the spring link shell (2) and bridges the upwardly open profile cross-section thereof, the closing part (11) having a closing part base (18) for supporting a wheel spring and a spring dome (19) which is raised relative to the closing part base (18), and
at least one bulkhead plate (20) within the spring link shell (2),
**characterized in that**
the at least one bulkhead plate (20) in the form of a completely or at least predominantly flat plate is arranged between a rear side (14) of the closing part (11), the rear side facing the spring link shell (2) and facing away from the wheel spring and the spring link shell (2) and runs longitudinally to the spring link shell (2) and perpendicularly to the rear side (14) of the closing part (11) under the spring dome (19), the at least one bulkhead plate (20) being spaced from the side legs (6, 7), and the at least one bulkhead plate (20) adjoining the rear side (14) of the closing part (11) and having at least one wall portion perpendicular to the rear side (14) of the closing part (11);
or **in that**
the two bulkhead plates (20) are each arranged between a rear side (14) of the closing part (11), the rear side facing the spring link shell (2) and facing away from the wheel spring and the spring link shell (2),
the two separate bulkhead plates (20) each having at least one wall portion perpendicular to the rear side (14) of the closing part (11) in order to additionally stiffen and support the closing part (11) in the effective direction (W) of the wheel spring, the two bulkhead plates (20) being arranged completely below the closing part (11) and each being supported flatly on one of the side legs (6, 7) and being supported with an upper edge (22) on the rear side (14) of the closing part (11), and
the two bulkhead plates (20) running substantially in parallel with the side legs (6, 7) and each extending therefrom into the spring dome (19) of the closing part (11).

2. Spring link (1) according to claim 1 in accordance with the first variant according to the invention, **characterized in that** at least one said bulkhead plate (20) is connected to the spring link shell (2) in order to provide additional support for the closing part (11) against the spring link shell (2).

3. Spring link (1) according to either claim 1 or claim 2, **characterized in that** at least one said bulkhead plate (20), which is connected to the spring link shell (2), is supported on the bridging element (8).

4. Spring link (1) according to claim 1 in accordance with the second variant according to the invention, **characterized in that** the side legs (6, 7) have an elongated hole (32) and the two bulkhead plates (20) are welded to the relevant side leg (6, 7) in the region of the elongated hole (32).

5. Spring link (1) according to any of claims 1 to 4, **characterized in that** at least one said bulkhead plate (20) has notches (23, 24) and/or angled edges (21,22) in the region of its attachment on the spring link shell (2) and/or in the region of its attachment on the closing part (11).

6. Spring link (1) according to claim 1 in accordance with the first variant according to the invention or according to claim 2, **characterized in that** at least one said bulkhead plate (20) has a T-shaped profile cross-section (29) in the region of the attachment on the spring link shell (2) and/or in the region of the attachment on the closing part (11).

7. Spring link (1) according to claim 1 in accordance with the first variant according to the invention or according to any of claims 2 or 6,
**characterized in that**
at least one said bulkhead plate (20) extends rearward into the spring dome (19).

8. Spring link (1) according to claim 1 in accordance with the first variant according to the invention or according to any of claims 2, 6 or 7,
**characterized in that**
at least one said bulkhead plate (20) lies in a plane (E) which is spanned by the longitudinal central axis (A) of the spring link shell (2) in the central portion (5) and a perpendicular to the rear side (14) of the closing part (11).

9. Spring link (1) according to claim 1 in accordance with the second variant according to the invention or according to claim 4, **characterized in that** the two bulkhead plates (20) are each welded to the rear side (14) or each to the rear side (14) and the spring dome (19).

10. Spring link (1) according to any of claims 1 to 9, **characterized in that** the closing part base (18) forms projecting arms (40, 41) which are extended along the upper edges of the side legs (6, 7) of the spring link shell (2) and overlap these and/or the closing part base (18) has material folds (44, 45) on its edges in the direction of the spring link shell (2), which material folds extend into the profile cross-section of the spring link shell (2).

11. Spring link (1) according to any of claims 1 to 10, **characterized in that** the closing part base (18) has a support surface (15) for the wheel spring and the spring dome (19) is inserted into the closing part base (18) from the rear side (14) opposite the support surface (15) and is fastened thereto, preferably welded, or the spring dome (19) is placed on the support surface (15) and fastened thereto, preferably welded.

## Revendications

1. Bras de suspension (1) à construction en tôle pour une suspension de roue de véhicule automobile, dans lequel ledit bras de suspension (1) comprend :
une coque (2) de bras de suspension comportant une première et une seule section d'extrémité (3) pour la liaison côté carrosserie du véhicule et une seconde section d'extrémité (4) pour la liaison côté roue ainsi qu'une section centrale (5) comportant une section transversale de profilé ouverte vers le haut en position de montage, qui est agencée entre les sections d'extrémité (3, 4) précitées, dans lequel la coque (2) de bras de suspension présente une section transversale de profilé en forme de U comportant deux branches latérales (6, 7) opposées l'une à l'autre et une entretoise (8) reliant celles-ci,
une pièce de fermeture (11) qui est fixée uniquement sur la section centrale (5) de la coque (2) de bras de suspension et qui enjambe la section transversale profilée ouverte vers le haut de celle-ci, dans lequel la pièce de fermeture (11) présente un fond (18) de pièce de fermeture pour soutenir un ressort de roue ainsi qu'un dôme de ressort (19) surélevé par rapport au fond (18) de pièce de fermeture, et
au moins une tôle de cloison (20) à l'intérieur de la coque (2) de bras de suspension,
**caractérisé en ce que**
l'au moins une tôle de cloison (20) est agencée sous la forme d'une platine entièrement ou au moins principalement plane entre une face arrière (14) de la pièce de fermeture (11), tournée vers la coque (2) de bras de suspension et opposée au ressort de roue, et la coque (2) de bras de suspension, et s'étend le long de la coque (2) de bras de suspension ainsi que perpendiculairement à la face arrière (14) de la pièce de fermeture (11) en passant sous le dôme de ressort (19), dans lequel l'au moins une tôle de cloison (20) est espacée des branches latérales (6, 7), et dans lequel l'au moins une tôle de cloison (20) se raccorde à la face arrière (14) de la pièce de fermeture (11) et présente au moins une section de paroi perpendiculaire à la face arrière (14) de la pièce de fermeture (11) ;
ou **en ce que**
deux tôles de cloison (20) sont agencées respectivement entre une face arrière (14) de la pièce de fermeture (11), tournée vers la coque (2) de bras de suspension et opposée au ressort de roue, et la coque (2) de bras de suspension,
dans lequel les deux tôles de cloison (20) séparées présentent respectivement au moins une section de paroi perpendiculaire à la face arrière (14) de la pièce de fermeture (11), afin de raidir et de soutenir en plus la pièce de fermeture (11) dans la direction d'action (W) du ressort de roue, dans lequel les deux tôles de cloison (20) sont agencées entièrement en dessous de la pièce de fermeture (11) et s'appuient à plat respectivement sur l'une des branches latérales (6, 7) et sont soutenues par un bord supérieur (22) sur la face arrière (14) de la pièce de fermeture (11), et
dans lequel les deux tôles de cloison (20) s'étendent sensiblement parallèlement aux branches latérales (6, 7) et s'étendent à partir de là respectivement dans le dôme de ressort (19) de la pièce de fermeture (11).

2. Bras de suspension (1) selon la revendication 1 correspondant à la première variante selon l'invention, **caractérisé en ce qu'au** moins une dite tôle de cloison (20) est reliée à la coque (2) de bras de suspension afin de fournir un support supplémentaire à la pièce de fermeture (11) contre la coque (2) de bras de suspension.

3. Bras de suspension (1) selon les revendications 1 ou 2,
**caractérisé en ce qu'**au moins une dite tôle de cloison (20), qui est reliée à la coque (2) de bras de suspension, est supportée par l'entretoise (8).

4. Bras de suspension (1) selon la revendication 1 correspondant à la deuxième variante selon l'invention, **caractérisé en ce que** les branches latérales (6, 7) présentent un trou oblong (32) et les deux tôles de cloison (20) sont soudées à la branche latérale (6, 7) respective dans la zone du trou oblong (32).

5. Bras de suspension (1) selon l'une des revendications 1 à 4,
**caractérisé en ce qu'**au moins une dite tôle de cloison (20) présente des encoches (23, 24) dans la zone de son raccordement à la coque (2) de bras de suspension et/ou dans la zone de son raccordement à la pièce de fermeture (11) et/ou présente des bords coudés (21, 22).

6. Bras de suspension (1) selon la revendication 1 correspondant à la première variante selon l'invention ou selon la revendication 2,
**caractérisé en ce qu'**au moins une dite tôle de cloison (20) présente une section transversale profilée en forme de T (29) dans la zone du raccordement à la coque (2) de bras de suspension et/ou dans la zone du raccordement à la pièce de fermeture (11).

7. Bras de suspension (1) selon la revendication 1 correspondant à la première variante selon l'invention ou selon l'une des revendications 2 ou 6,
**caractérisé en ce que**
au moins une dite tôle de cloison (20) s'étend à l'arrière dans le dôme de ressort (19).

8. Bras de suspension (1) selon la revendication 1 correspondant à la première variante selon l'invention ou selon l'une des revendications 2, 6 ou 7,
**caractérisé en ce que**
au moins une dite tôle de cloison (20) est située dans un plan (E) défini par l'axe central longitudinal (A) de la coque (2) de bras de suspension dans la section centrale (5) et une perpendiculaire à la face arrière (14) de la pièce de fermeture (11).

9. Bras de suspension (1) selon la revendication 1 correspondant à la deuxième variante selon l'invention ou selon la revendication 4,
**caractérisé en ce que** les deux tôles de cloison (20) sont soudées respectivement à la face arrière (14) ou respectivement à la face arrière (14) et au dôme de ressort (19).

10. Bras de suspension (1) selon l'une des revendications 1 à 9,
**caractérisé en ce que** le fond (18) de pièce de fermeture forme des bras en saillie (40, 41) qui sont prolongés le long des bords supérieurs des branches latérales (6, 7) de la coque (2) de bras de suspension et qui les chevauchent et/ou le fond (18) de pièce de fermeture présente sur ses bords des repliements de matière (44, 45) en direction de la coque (2) de bras de suspension qui s'étendent dans la section transversale du profilé de la coque (2) de bras de suspension.

11. Bras de suspension (1) selon l'une des revendications 1 à 10,
**caractérisé en ce que** le fond (18) de pièce de fermeture présente une surface de support (15) pour le ressort de roue et le dôme de ressort (19) est inséré dans le fond (18) de pièce de fermeture par la face arrière (14) opposée à la surface de support (15) et y est fixé, de préférence soudé, ou le dôme de ressort (19) est posé sur la surface de support (15) et y est fixé, de préférence soudé.
